# EUROPÄISCHE PATENTANMELDUNG

(11) **EP 1 128 109 A1**
(43) Veröffentlichungstag der Anmeldung: **29.08.2001**
(21) Anmeldenummer: 00103695.3
(22) Anmeldetag: 22.02.2000
(51) Int. Cl.: F16K 29/00, F16K 25/00

(54) **Ventil für eine Stelleinrichtung**

(71) Anmelder: Siemens Building Technologies AG, 6300 Zug (CH)
(72) Erfinder: Pulli, Giuseppe, 8712 Staefa (CH)

(57) **Zusammenfassung**

Ein Ventil (3) für eine Stelleinrichtung weist ein Sitzteil (2) und auch einen Schliesskörper (1) auf, der in seinem Kontaktbereich (4) mit dem Sitzteil (2) konisch ausgebildet ist. Die endgültige Form des Sitzteils (2) und/oder des Schliesskörpers (1) wird erfindungsgemäss durch Einpressen des Schliesskörpers (1) in eine Bohrung (5) des Sitzteils (2) ausgebildet. Beim Ventil (3) mit dem derart durch plastische Verformung spielfrei in das Sitzteil (2) eingepassten Schliesskörper (1) ist ein sprungartiger Verlauf der vom Ventilhub (b) abhängigen Durchflusskennlinie im Öffnungsbereich bzw. Schliessbereich vermeidbar.

## Beschreibung

Die Erfindung bezieht sich auf ein Ventil der im Oberbegriff des Anspruchs 1 genannten Art.

Solche Ventile eignen sich beispielhaft für Stelleinrichtungen in Regelkreisen in Heizungs-, Lüftungs- und Klimaanlagen. Ein derartiges Ventil ist grundsätzlich als Absperr- und Drosselglied in Rohrleitungen für flüssige oder gasförmige Medien einsetzbar, deren Durchflussmenge, Druck oder Wärmemenge gesteuert oder geregelt wird.

Aus EP 0 764 785 A ist ein Ventil dieser Art mit konischem Ventilsitz bekannt, welches zwei Längsschieber aufweist und einen Feinsteuerbereich umfasst.

Es ist auch bekannt (WO 95/33943), einen konischen Ventilsitz durch ein Konstruktionselement aus einem Elastomer zu verbessern.

Ferner wird in EP 0 124 821 A vorgeschlagen, an einem konischen Ventilkörper einen in gewissen Grenzen federnder Vorsprung auszubilden, welcher bei einer Schliessbewegung eine elastische Anpassung des Ventilkörpers an den Ventilsitz ermöglicht.

Wird bei den bekannten Ventilen deren Kennlinie des Durchflusses in Abhängigkeit des Hubs betrachtet, zeigt sich, dass im Bereich unmittelbar nach dem Öffnen des Ventils ein Sprung auftritt. Ein tropfenweises Regeln im Schliess- oder Öffnungsbereich des Ventils ist damit nicht möglich.

Der Erfindung liegt die Aufgabe zugrunde, ein Ventil mit einer im Schliess- oder Öffnungsbereich verbesserten Kennlinie zu schaffen und weiter ein Verfahren zur Herstellung des Ventils anzugeben.

Die genannte Aufgabe wird erfindungsgemäss durch die Merkmale der Ansprüche 1 und 7 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Teildarstellung eines Ventils mit einem Schliesskörper und einem Sitzteil vor der vollständigen Ausbildung der Form des Sitzteils und/oder des Schliesskörpers,
- Fig. 2: eine Teildarstellung des Ventils mit dem Schliesskörper und dem Sitzteil in der endgültig ausgebildeten Form,
- Fig. 2.1: einen Ausschnitt aus der Fig. 2, mit Einzelheiten eines Kontaktbereichs zwischen dem Schliesskörper und dem Sitzteil,
- Fig. 3: den prinzipiellen Verlauf von Ventil-Kennlinien im Schliess- oder Öffnungsbereich,
- Fig. 4: eine erste Ausführungsvariante des Schliesskörpers, und
- Fig. 5: eine zweite Ausführungsvariante des Schliesskörpers.

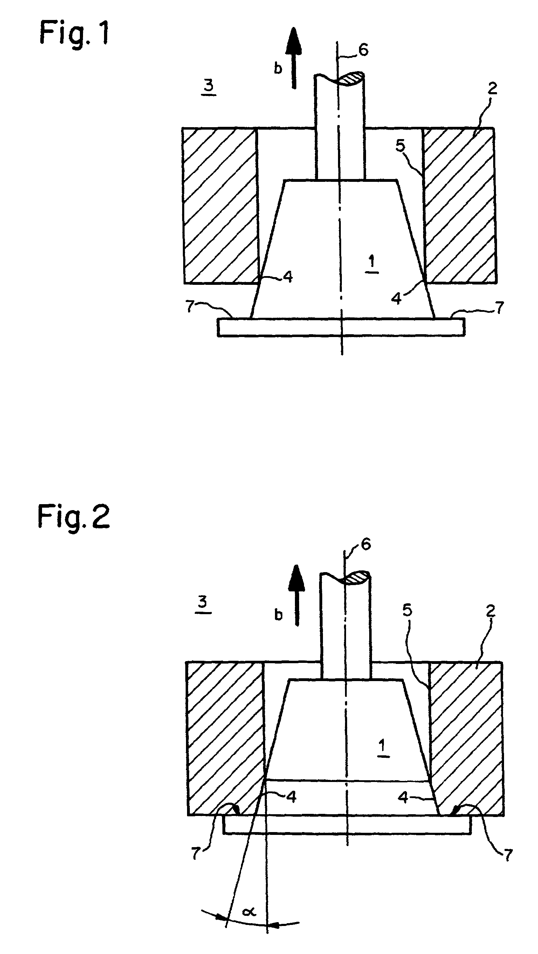

In der Fig. 1 bedeutet 1 einen Schliesskörper und 2 ein geschnitten dargestelltes Sitzteil eines Ventils 3. Das Ventil 3 ist ein Teil einer hier nicht dargestellten Stelleinrichtung. Die Stelleinrichtung selbst ist beispielsweise Teil einer Brauchwasseranlage, Teil einer Fernwärmeeinrichtung oder auch Teil eines Regelkreises einer Heizungs-, Lüftungs- und Klimaanlage.

In einem Kontaktbereich 4, in dem der Schliesskörper 1 bei geschlossenem Ventil 3 in einer am Sitzsteil 2 angebrachten, durchgehenden Bohrung 5 anliegt, verkleinert sich der senkrecht zu einer Schliessbewegung b wirksame Querschnitt des Schliesskörpers 1 in der Richtung der Schliessbewegung b des Ventils 3. In der Fig. 1 hat der Schliesskörper 1 im Kontaktbereich 4 die Form eines Kegelstumpfs, der vorteilhafterweise um eine Hubachse 6 des Schliesskörpers 1 rotationssymmetrisch ausgebildet ist und dessen Querschnitt in Richtung der Schliessbewegung b abnimmt.

Mit Vorteil weist der Schliesskörper 1 am weiteren Ende des Kontaktbereichs 4 - das heisst am Ende mit dem grössten wirksamen Querschnitt - eine Schulter 7 auf.

In der Fig. 2 sind die Bohrung 5 des Sitzteils 2 und der Schliesskörper 1 plastisch optimal aneinander angeformt. Durch die dargestellte optimale Anpassung der Form des Sitzteils 2 an die Form des Schliesskörpers 1 verläuft der Kontaktbereich 4 rund um den Schliesskörper 1 etwa bandförmig. Durch die plastische Anformung des Sitzteils 2 und/oder des Schliesskörpers 1 wird eine gegenseitig spielfreie Anordnung des Schliesskörpers 1 und des Sitzteils 2 im Ventil 3 erreichbar.

Ein vorteilhaftes Verfahren zur Ausbildung einer gegenseitig spielfreien Anordnung des Schliesskörpers 1 und des Sitzteils 2 im Ventil 3 weist folgende drei Verfahrensschritte a, b und c auf:
a) Ausbilden des Schliesskörpers 1 derart, dass sich der senkrecht zur Schliessbewegung b wirksame Querschnitt des Schliesskörpers 1 in einem gewissen Bereich in der Richtung der Schliessbewegung b verkleinert,
b) Einführen des Schliesskörpers 1 in die durchgehende Bohrung 5 des Sitzteils 2, und
c) Einpressen des Schliesskörpers 1 in das Sitzteil 2 derart, dass die Bohrung 5 des Sitzteils 2 und/oder der Schliesskörper 1 plastisch verformt werden/wird, wobei durch die plastische Verformung zwischen dem Schliesskörper 1 und dem Sitzteil 2 ein Kontaktbereich 4 derart ausgebildet wird, dass er etwa bandförmig vollständig um den Schliesskörper 1 verläuft.

Mit Vorteil werden der Schliesskörper 1 und das Sitzteil 2 so dimensioniert, dass der Schliesskörper 1 beim Einpressen bis zur Schulter 7 in das Sitzteil 2 eindringt, dadurch ist eine Endstellung der Hubbewegung b des Ventils 3 genau definiert.

Grundsätzlich sind der Schliesskörper 1 und das Sitzteil 2 mit Vorteil aus einem harten, in der gewählten Gestalt nicht federnden Material.

Bei der Abstimmung der Werkstoffe für den Schliesskörper 1 einerseits und das Sitzteil 2 andrerseits ist zu berücksichtigen, dass die Härte und die Verformbarkeit des Sitzteils 2, bezogen auf die Härte und die Verformbarkeit des Schliesskörpers 1, so gewählt ist, dass sich beim Einpressen des Schliesskörpers 1 der Kontaktbereich 4 etwa bandförmig auf dem ganzen Umfang des Schliesskörpers 1 zwischen dem Schliesskörper 1 und dem Sitzteil 2 ausbildet, wobei beim Einpressen grundsätzlich entweder das Sitzteil 2 oder der Schliesskörper 1 oder auch das Sitzteil 2 und der Schliesskörper 1 plastisch verformt werden. Damit sind grundsätzlich metallische, keramische oder polymere Werkstoffe oder Werkstoffkombinationen geeignet, wobei der Werkstoff mit Vorteil auch auf ein für das Ventil 3 vorgesehenes Strömungsmittel - beispielsweise einen Wärmeenergieträger, wie etwa Heizungswasser - und dessen chemische und physikalische Eigenschaften abzustimmen ist. Bei Bedarf sind die Werkstoffe in bekannter Art zu vergüten, indem beispielsweise ein Korrosionsschutz aufgebracht wird.

In einer bevorzugten Ausführungsvariante sind der Schliesskörper 1 und das Sitzteil 2 aus Metall; in einer beispielhaften Ausführung des Ventils 3 ist der Schliesskörper 1 aus Chromstahl und das Sitzteil 2 aus Messing.

Zur Verdeutlichung der Ausgestaltung des Kontaktbereichs 4 ist in der Fig. 2.1 ein Teil des in der Fig. 2 dargestellten Ventils 3 noch detaillierter dargestellt. Im fertig ausgeformten Zustand ist der Kontaktbereich 4 zwischen dem Schliesskörper 1 und dem Sitzteil 2 bandförmig und verläuft über den ganzen Umfang des Schliesskörper 1.

In dem in der Fig. 2.1 dargestellten allgemeinen Ausführungsfall ist sowohl der Schliesskörper 1 als auch das Sitzteil 2 plastisch verformt. Zur zeichnerischen Darstellung der plastischen Verformung sind drei Hilfslinien x, y und z eingezeichnet, wobei die Hilfslinie x auf der Schnittkante der ursprünglichen Bohrung 5 und die Hilfslinie z auf der ursprünglichen Kante des Konus des Schliesskörpers 1 und die Hilfslinie y zwischen den beiden Hilfslinien x und z auf der angeformten Kante des Kontaktbereichs 4 liegt.

Ein erster Anteil 8, nämlich die plastische Verformung des Schliesskörpers 1, ist zeichnerisch horizontal schraffiert zwischen den beiden Hilfslinien z und y, also zwischen der ursprünglichen Kante des Konus des Schliesskörpers 1 und der Kante des Kontaktbereichs 4 dargestellt. Weiter ist ein zweiter Anteil 9, nämlich die plastische Verformung des Sitzteils 2, zeichnerisch vertikal schraffiert zwischen den beiden Hilfslinien x und y, also zwischen der ursprünglichen Schnittkante der Bohrung 5 des Sitzteils 2 und der angeformten Kante des Kontaktbereichs 4 dargestellt.

Die vorgeschlagene und beanspruchte Ausführung des Ventils 3 ist besonders für Kleinhub-Ventile nutzbringend, das heisst für Ventile mit einem Nennhub in der Grössenordnung von etwa fünf Millimetern.

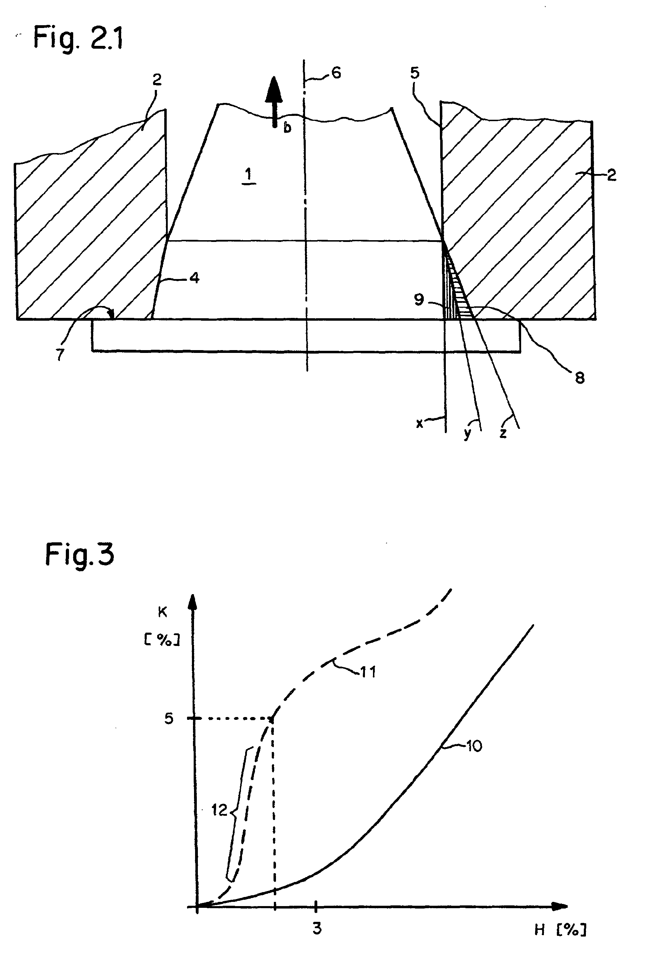

In der Fig. 3 ist im Diagramm mit K der relative Durchlass und mit H der relative Hub eines Ventils im Schliess- oder Öffnungsbereich dargestellt, wobei der Verlauf einer mit 10 bezeichneten Durchlasskennlinie für Regelventile ideal ist. Zum Vergleich dazu ist mit 11 eine gestrichelt dargestellte zweite Durchlasskennlinie angegeben, wie sie grundsätzlich ein bekanntes Ventil hat, dessen Durchlasskennlinie 11 im Schliess- oder Öffnungsbereich einen Eingangssprung 12 aufweist.

Der Eingangssprung 12 ist vermeidbar, wenn das Ventil 3 zwischen dem Schliesskörper 1 und dem Sitzteil 2 kein Spiel aufweist.

Durch das erfindungsgemässe Einpressen des Schliesskörpers 1 in das Sitzteil 2 resultiert auf einfache und zuverlässige Art eine spielfreie Passung zwischen dem Schliesskörper 1 und dem Sitzteil 2, wobei bei der Produktion keine Exemplarstreuung auftritt.

Dadurch, dass der Kontaktbereich 4 bei geschlossenem Ventil bandartig um den ganzen Umfang des Schliesskörpers 1 verläuft und die Oberflächen des Sitzteils 2 und des Schliesskörpers 1 im Kontaktbereich 4 hart sind, nimmt beim Öffnen des Ventils 3 der den Durchfluss bestimmende Querschnitt zwischen dem Schliesskörper 1 und dem Sitzteil 2 stetig zu.

Mit dem Ventil 3, bei dem im geschlossenen Zustand der Schliesskörper 1 und das Sitzteil 2 im Kontaktbereich 4 eine spielfreie Passung bilden, ist das Durchlassvolumen auch im Schliess- oder Öffnungsbereich - das heisst bei etwa 3 % des Nennhubs - praktisch tropfenweise über den Hub verstellbar.

Die in der Fig. 1 dargestellte konische Form des Schliesskörpers 1 im Kontaktbereich 4 ist besonders einfach und kostengünstig herstellbar.

Bei Bedarf - wenn beispielsweise durch strömungstechnische Anforderungen notwendig - kann die konische Form des Schliesskörpers 1 im Kontaktbereich 4 grundsätzlich durch eine andere Körperform ersetzt werden, bei der sich der senkrecht zur Schliessbewegung b wirksame Querschnitt in der Richtung der Schliessbewegung b verkleinert.

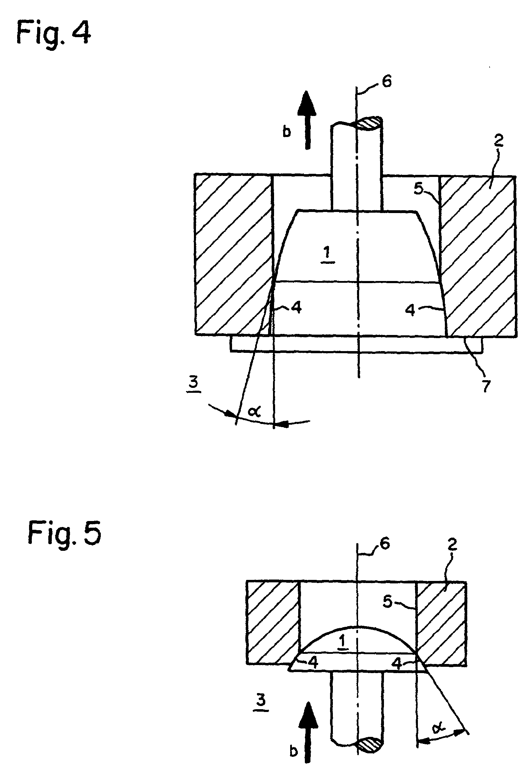

In Fig. 4 ist eine erste Ausführungsvariante des Ventils 3 dargestellt. Der Schliesskörper 1 hat im Kontaktbereich 4 zum Sitzteil 2 die Form eines abgestumpften Rotationsparaboloids, welche beim Einpressen des Schliesskörpers 1 den Sitzteil 2 entsprechend ausformt.

Schliesslich ist in Fig. 5 eine zweite Ausführungsvariante des Ventils 3 dargestellt. Der Schliesskörper 1 hat im Kontaktbereich 4 zum Sitzteil 2 die Form eines Kugelabschnitts oder einer Kugelschicht, welche beim Einpressen des Schliesskörpers 1 den Sitzteil 2 entsprechend ausformt.

Je nach Ausgestaltung der Form des Schliesskörpers 1 im Kontaktbereich 4, wird auch eine mittlere Abweichung α zwischen der Oberfläche des Kontaktbereichs 4 und der Hubachse 6 (Fig. 2, Fig. 4, Fig. 5) beeinflussbar, welche die erforderliche Verformungsarbeit beim Einpressen des Schliesskörpers 1 in das Sitzteil 2 mitbestimmt. Mit der Festlegung einer gewissen mittlern Abweichung α und einer entsprechenden Verformungsarbeit zur Ausbildung des Kontaktbereichs 4 ist das charakteristische Verhalten des Ventils 3 - also das Verhalten des relativen Durchlasses K in Abhängigkeit des relativen Hubs H - anforderungsgerecht anpassbar.

## Patentansprüche

1. Ventil für eine Stelleinrichtung, mit einem Sitzteil (2) und einem Schliesskörper (1), wobei der Schliesskörper (1) derart angeordnet und geformt ist, dass der senkrecht zu einer Schliessbewegung (b) ausgebildete Querschnitt des Schliesskörpers (1) sich wenigstens in einem gewissen Bereich (4) in der Richtung der Schliessbewegung (b) verkleinert, dadurch gekennzeichnet,
dass die endgültige Form des Sitzteils (2) und/oder des Schliesskörpers (1) durch ein Einpressen des Schliesskörpers (1) in eine Bohrung (5) des Sitzteils (2) ausgebildet ist, wobei zwischen dem Schliessköper (1) und dem Sitzteil (2) durch plastische Verformung ein Kontaktbereich (4) ausgebildet ist, der den Schliesskörper (1) auf seinem ganzen Umfang umfasst.

2. Ventil nach Anspruch 1, dadurch gekennzeichnet,
dass der Schliesskörper (1) im Kontaktbereich (4) mindestens näherungsweise kegelstumpfförmig ist.

3. Ventil nach Anspruch 1, dadurch gekennzeichnet,
dass der Schliesskörper (1) im Kontaktbereich (4) mindestens näherungsweise die Form eines Kugelabschnitts oder einer Kugelschicht aufweist.

4. Ventil nach Anspruch 1, dadurch gekennzeichnet,
dass der Schliesskörper (1) im Kontaktbereich (4) die Form eines abgestumpften Rotationsparaboloids aufweist.

5. Ventil nach einem vorangehenden Anspruch, dadurch gekennzeichnet,
dass der Schliesskörper (1) am weiteren Ende des Kontaktbereichs (4) durch eine Schulter (7) abgeschlossen ist, durch welche beim endgültigen Formen des Sitzteils (2) und/oder des Schliesskörpers (1) das Einpressen des Schliesskörpers (1) begrenzbar ist.

6. Ventil nach einem vorangehenden Anspruch, dadurch gekennzeichnet,
dass der Schliesskörper (1) und das Sitzteil (2) aus Metall sind.

7. Verfahren zur Ausbildung einer spielfreien Anordnung eines Schliesskörpers (1) und eines Sitzteils (2) in einem Ventil (3), mit den Verfahrensschritten:
Ausbilden des Schliesskörpers (1) derart, dass sich der senkrecht zu einer Schliessbewegung (b) wirksame Querschnitt des Schliesskörpers (1) in einem gewissen Bereich (4) in der Richtung der Schliessbewegung (b) verkleinert,
Einführen des Schliesskörpers (1) in eine durchgehende Bohrung (5) des Sitzteils (2), und
Einpressen des Schliesskörpers (1) in das Sitzteil (2) derart, dass die Bohrung (5) des Sitzteils (2) und/oder der Schliesskörper (1) plastisch verformt werden/wird, wobei durch die plastische Verformung zwischen dem Schliesskörper (1) und dem Sitzteil (2) ein Kontaktbereich (4) ausgebildet wird, der etwa bandförmig vollständig um den Schliesskörper verläuft.
